# FASCICULE DE BREVET EUROPEEN

(11) **EP 0 611 200 B1**
(45) Date de publication et mention de la délivrance du brevet: **09.05.2001**
(21) Numéro de dépôt: 94400258.3
(22) Date de dépôt: 08.02.1994
(51) Int. Cl.: F16L 41/16

(54) **Dispositif de fermeture étanche et de raccordement d'une enceinte à une canalisation extérieure**
Dichte Verschluss- und Verbindungsvorrichtung von einem Aussenrohr an einem Gehäuse
Sealed closure and joint device of an enclosure to an external pipe

(30) Priorité: 10.02.1993 FR 9301469
(43) Date de publication de la demande: 17.08.1994
(73) Titulaire: Société à Responsabilité dite: CAPRY, F-92700 Colombes (FR)
(72) Inventeur: Nokovitch, Boris, F-92700 Colombes (FR)
(74) Mandataire: Hammond, William

(56) Documents cités:
- FR-A- 1 160 843
- FR-A- 2 066 414
- GB-A- 194 021
- GB-A- 2 051 991

## Description

L'invention concerne un dispositif de fermeture étanche et de raccordement d'une enceinte à une canalisation extérieure.

Il est connu, en vue de leur stockage, de protéger des matériels contre la corrosion en les enfermant dans des enceintes étanches dans lesquelles un vide poussé est réalisé ou qui sont remplies d'un gaz inerte. Dans un certain nombre de cas, notamment lorsqu'il s'agit de stocker des machines ou pièces de machines, il est nécessaire de faire le vide ou d'insuffler un gaz dans l'enceinte, par exemple une housse souple, après que celle-ci ait été close hermétiquement autour du matériel à stocker. Il est donc indispensable de pouvoir raccorder alors l'enceinte à une canalisation extérieure en vue du conditionnement initial du matériel et, éventuellement, de la maintenance de celui-ci dans l'atmosphère appropriée en cas de stockage de longue durée.

On connaît déjà des dispositifs de fermeture étanche et de raccordement tel que celui décrit dans le document FR-A-2.066.414. D'autres dispositifs sont notamment décrits dans les documents GB-A-194.021 et FR-A-1.160.843.

L'invention vise à fournir un dispositif fiable et peu coûteux qui soit de conception simple et d'une utilisation aisée afin d'assurer la fermeture étanche d'une enceinte et le raccordement sélectif de celle-ci à une canalisation extérieure.

A cet effet, l'invention a pour objet un tel dispositif comprenant, d'une part, un corps de vanne monté de manière étanche à travers un trou d'une paroi de l'enceinte et, d'autre part, un obturateur reçu dans ce corps et des moyens pour raccorder sélectivement de manière étanche cette enceinte à la canalisation dans une position ouverte de l'obturateur, ces moyens de raccordement comprenant un manchon amovible adapté pour être fixé extérieurement de manière étanche au corps, caractérisé par le fait que ce corps de vanne est constitué, d'une part, par une bague comportant à l'une de ses extrémités une collerette annulaire destinée à prendre appui contre la face intérieure de la paroi à la périphérie du trou et, d'autre part, un écrou de diamètre extérieur sensiblement égal à celui de la collerette et vissé sur la bague, la longueur de la partie filetée de cette bague étant sensiblement supérieure aux épaisseurs cumulées de la paroi et de l'écrou, que cet obturateur comprend une tête portant une partie cylindrique filetée extérieurement et reçue dans un alésage taraudé du corps de vanne, cette partie cylindrique présentant à partir de son extrémité opposée à la tête, un alésage axial qui communique avec un orifice transversal ménagé au voisinage de la tête et relié à la canalisation extérieure, et que ces moyens de raccordement comprennent également un organe d'actionnement de l'obturateur monté à rotation et coulissement dans le manchon pour déplacer l'obturateur dans ce manchon entre une position fermée dans laquelle la tête de l'obturateur est au contact de l'extrémité de la bague opposée à la collerette et la partie cylindrique enfoncée dans l'enceinte, et une position ouverte dans laquelle l'enceinte communique avec la canalisation par l'intermédiaire du corps et du manchon.

D'autres caractéristiques et avantages de l'invention ressortiront de la description qui va suivre d'un mode de réalisation donné uniquement à titre d'exemple et illustré par les dessins annexés sur lesquels :
La figure 1 est une vue en perspective, avec arrachement, d'un dispositif selon l'invention ;
La figure 2 est une vue en coupe axiale du dispositif sur laquelle le dispositif de raccordement est monté sur la vanne dont l'obturateur est en position fermée ; et

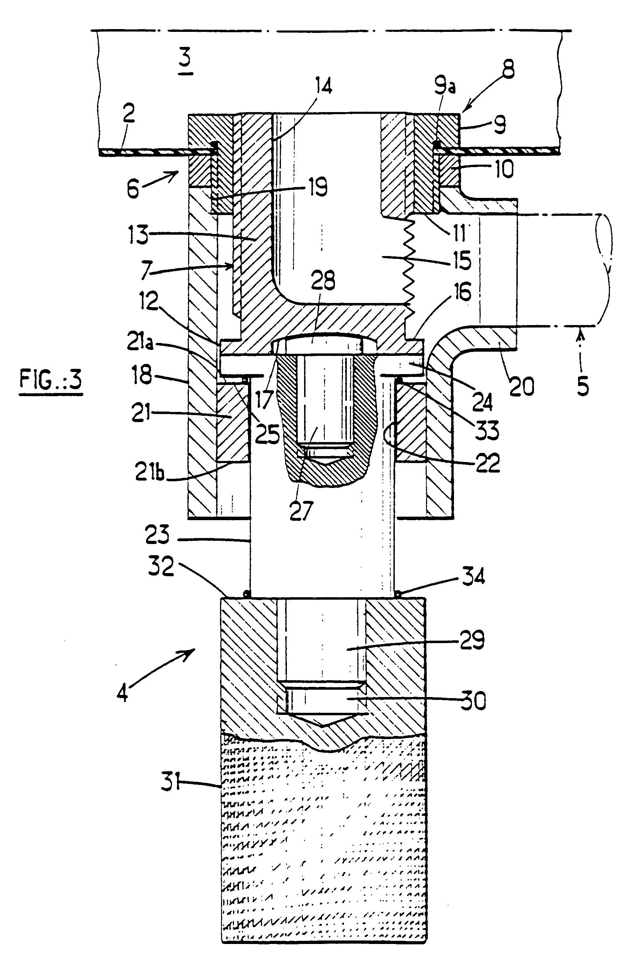

La figure 3 est une vue en coupe axiale similaire à la figure 2 montrant l'obturateur en position ouverte pour le raccordement de l'enceinte à une canalisation extérieure.

En se reportant aux figures, le dispositif représenté comprend une vanne 1 montée de manière étanche dans une paroi 2 d'une enceinte 3, et un dispositif 4 de raccordement de l'enceinte 3 à une canalisation extérieure 5.

La vanne 1 comporte un corps 6 et un obturateur 7. Le corps 6 comprend une bague 8 de forme tubulaire cylindrique filetée intérieurement et extérieurement et destinée à être montée à travers un trou de la paroi 2 ayant sensiblement le même diamètre que le diamètre extérieur de la bague 8. La bague 8 présente à l'une de ses extrémités une collerette annulaire 9 destinée à venir prendre appui contre la face intérieure de la paroi 2 à la périphérie du trou précité, tandis qu'un écrou annulaire 10 de diamètre extérieur sensiblement égal à celui de la collerette 9 peut être vissé extérieurement sur la bague 8. Le serrage de la paroi 2 entre la collerette 9 et l'écrou annulaire 10 avec, si nécessaire, interposition d'un joint d'étanchéité 9a, permet d'assurer l'étanchéité entre la paroi 2 et le corps 6. La longueur de la partie filetée de la bague 8 est sensiblement supérieure aux épaisseurs cumulées de la paroi 2 et de l'écrou annulaire 10 de telle sorte qu'en position montée du corps 6 sur la paroi 2 une partie de l'extrémité filetée de la bague 8 fait saillie vers l'extérieur au-delà de l'écrou annulaire 10.

L'extrémité 11 de la bague 8 qui est opposée à la collerette 9 forme un siège contre lequel l'obturateur 7 peut venir prendre appui en position fermée de la vanne 1. Cet obturateur 7 comprend une tète 12 portant une partie cylindrique 13 filetée extérieurement de manière à pouvoir être vissée dans la bague 8. La partie cylindrique 13 de l'obturateur 7 présente, à partir de son extrémité opposée à la tête 12, un alésage axial 14 communiquant avec un orifice transversal 15 ménagé, au voisinage de la tête 12, à travers la paroi de la partie cylindrique 13. Cette dernière a une longueur telle que son filetage extérieur reste partiellement engagé dans le filetage intérieur de la bague 8 lorsque l'obturateur est amené dans une position ouverte où l'orifice 15 est entièrement dégagé au-delà du siège 11.

La tête 12 a la forme d'un disque dont le diamètre extérieur est légèrement supérieur à celui de la partie tubulaire 13 considérée au sommet du filetage, tout en étant au plus égal au diamètre extérieur de la bague 8 considérée au fond du filetage. La tête 12 définit ainsi, du côté de la partie tubulaire 13, un épaulement annulaire 16 destiné à être serré contre le siège annulaire 11 de la bague 8 pour assurer la fermeture étanche de la vanne 1 lorsque l'obturateur 7 est vissé à fond dans le corps 6.

La tête 12 présente dans sa face extérieure une rainure ou empreinte 17 destinée à permettre le vissage et le dévissage de l'obturateur 7 au moyen d'un tournevis ou dudit dispositif de raccordement 4 comme cela sera décrit dans la suite. La rainure 17 a, par exemple, la forme d'une cavité à bords latéraux rectilignes et à fond hémisphérique ou cylindrique.

Le dispositif de raccordement 4 comprend un manchon tubulaire cylindrique 18 taraudé à l'une de ses extrémités en 19 de manière à pouvoir être vissé sur la partie extérieure de la bague 8 qui fait saillie au-delà de l'écrou annulaire 10. Le manchon 18 comporte au voisinage de son extrémité filetée 19 un embout tubulaire transversal 20 permettant de raccorder de manière étanche son volume intérieur à la canalisation extérieure 5. Le manchon 18 comporte intérieurement une pièce annulaire cylindrique 21 dont la paroi cylindrique intérieure lisse 22 constitue une portée dans laquelle peut coulisser et tourner un piston ou coulisseau 23, tandis que les faces planes opposées 21a et 21b de cette pièce 21 constituent des butées de limitation de la course du coulisseau 23.

Le coulisseau 23 a la forme d'une pièce massive cylindrique dont le diamètre extérieur est adapté pour permettre son coulissement et sa rotation avec frottement dans la pièce annulaire 21. Le coulisseau 23 se termine à une extrémité par une portée 24 de plus grand diamètre définissant un épaulement 25 susceptible de venir en appui contre la face 21a pour limiter la course du coulisseau 23 à l'intérieur du manchon 18. Du côté de sa portée élargie 24, le coulisseau 23 est percé axialement d'un trou borgne taraudé 26 destiné à recevoir une pièce cylindrique filetée 27 présentant à l'une de ses extrémités une saillie 28 de forme et dimensions complémentaires de celles de la rainure 17. A son extrémité opposée à la portée 24, le coulisseau 23 se termine par un prolongement axial fileté 29 de plus petit diamètre et destiné à être reçu dans un trou borgne taraudé 30 percé axialement dans l'une des extrémités d'une poignée cylindrique 31 présentant sur au moins une partie de sa paroi extérieure cylindrique des stries, indentations ou moyens similaires destinés à prévenir le glissement de la main de l'utilisateur lorsqu'il actionne la poignée 31 en vue du serrage ou du desserrage l'obturateur 7 comme cela sera décrit dans la suite. Cette poignée 31 a un diamètre extérieur au plus égal au diamètre intérieur du manchon et supérieur au diamètre intérieur de la pièce annulaire 21 de telle sorte que sa face d'extrémité dans laquelle est percé le trou 30 définit un épaulement 32 susceptible de venir en appui contre la face 21b de la pièce annulaire 21 pour limiter la course du coulisseau 23 dans la direction qui tend à le faire sortir du manchon 18.

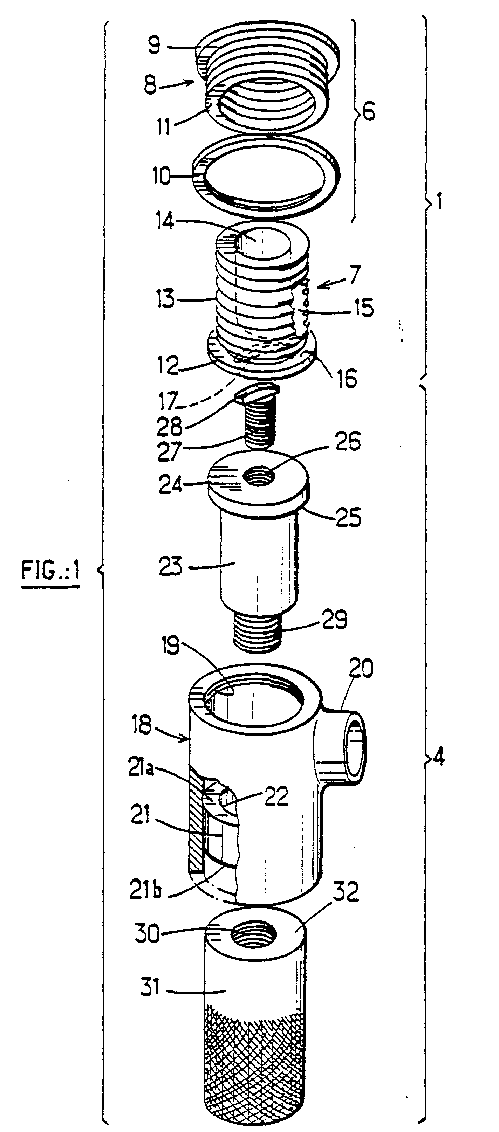

Le dispositif de raccordement 4 est complété par deux joints toriques 33 et 34 (non représentés sur la figure 1) montés sur le coulisseau 23 de part et d'autre de la pièce annulaire 21. De préférence, le manchon 18 est réalisé en chlorure de polyvinyle, tandis que toutes les autres pièces de la vanne et du dispositif de raccordement sont en "DELRIN" ou autre polyacétal.

Pour assembler le dispositif de raccordement 4, on visse à fond la pièce filetée 27 dans le trou 26 jusqu'à ce que la saillie 28 soit appliquée contre l'extrémité du coulisseau 23. Cette forme de réalisation de la saillie 28, qui est une pièce soumise à usure, permet d'assurer facilement son remplacement périodique.

On place ensuite le joint torique 33 sur le coulisseau 23 et on introduit celui-ci dans le manchon 18 à partir de son extrémité 19. Au cours de ce mouvement, le joint torique 33 est repoussé par la face 21a jusqu'à ce qu'il vienne en butée contre l'épaulement 25. L'extrémité du coulisseau 23 adjacente à sa partie filetée 29 fait alors saillie hors du manchon du côté opposé à l'embout 20 et on peut placer sur celle-ci le joint torique 34 puis visser la poignée 31 sur l'extrémité filetée 29. En enfonçant à fond la poignée 31 vers l'intérieur du manchon, le joint torique 34 se trouve repoussé par la face 21b contre l'épaulement 32 et les deux joints 33 et 34 se trouvent alors en place.

Par ailleurs, le corps 6 ayant été fixé de façon étanche à travers la paroi 2 lors de la réalisation de l'enceinte 3, l'obturateur 7 peut être manoeuvré, soit au moyen d'un outil conventionnel du type tournevis, soit au moyen du dispositif de raccordement 4. Dans ce dernier cas, on vient visser l'extrémité taraudée 19 du manchon 18 sur la partie en saillie de la bague 8 jusqu'à ce que le serrage exercé assure l'étanchéité voulue.

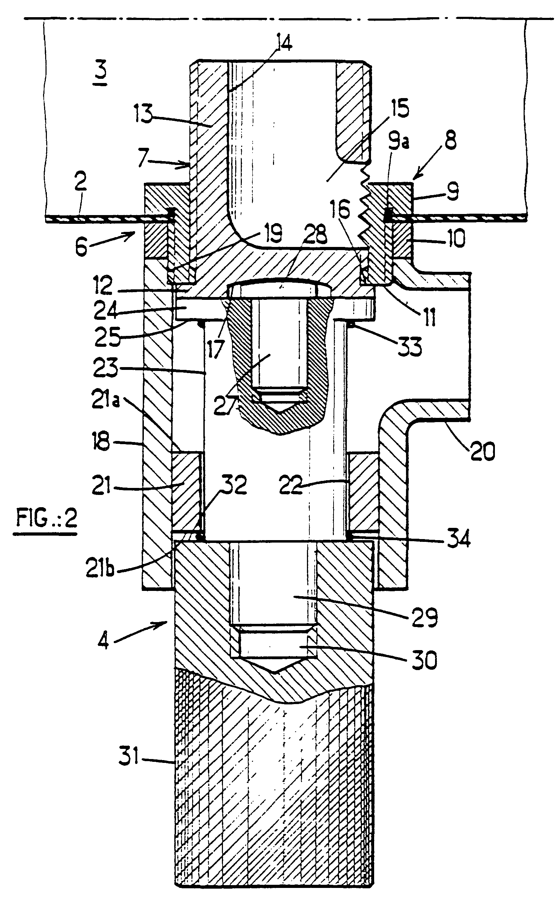

Si l'obturateur 7 se trouve alors en position fermée comme représenté à la figure 2, on tourne le coulisseau 23 au moyen de la poignée 31 jusqu'à ce que la saillie 28 s'engage dans la rainure 17. Si cela n'a pas encore été fait, on raccorde alors l'embout 20 à la canalisation extérieure 5 par tout moyen approprié destiné à assurer une liaison étanche.

Une fois ce raccordement effectué, on dévisse l'obturateur 7 en faisant tourner dans le sens voulu la poignée 31 comme on le ferait avec un tournevis ordinaire. Au cours de ce dévissage, l'orifice 15 se trouve mis en communication avec le volume intérieur du manchon et la canalisation 5 et le mouvement est poursuivi jusqu'à ce que l'épaulement 25 vienne en appui contre la face 21a avec interposition du joint d'étanchéité 33. La longueur de l'obturateur 7 est telle que, dans cette position ouverte, il demeure vissé dans la bague 8. Par conséquent, le couple de desserrage exercé sur la poignée 31 par l'utilisateur a pour effet de comprimer le joint 33 entre l'épaulement 25 et la face 21a et d'assurer ainsi l'étanchéité entre le coulisseau 23 et la pièce annulaire 21. Cette position de butée est choisie de manière telle que l'orifice 15 se trouve alors aligné avec l'embout 20. L'enceinte 3 est ainsi raccordée de manière étanche à la canalisation 5.

Pour fermer la vanne 1, on tourne la poignée 31 dans le sens qui tend à assurer le vissage de l'obturateur 7 dans la bague 8 jusqu'à ce que l'épaulement 32 vienne comprimer le joint 34 contre la face 21b comme représenté à la figure 2. La position axiale de venue en butée de l'épaulement 32 contre la face 21b est choisie pour limiter le couple de serrage de l'obturateur 7 dans le corps 6 à la valeur voulue pour assurer l'étanchéité qui convient en position fermée de la vanne 1.

Il va de soi que le mode de réalisation décrit n'est qu'un exemple et l'on pourrait le modifier, notamment par substitution d'équivalents techniques, sans sortir pour cela du cadre de l'invention. C'est ainsi, par exemple, que un ou plusieurs joints à lèvres ou autres peuvent être prévus entre le coulisseau 23 et la pièce annulaire 21 et/ou entre la portée 24 et la paroi intérieure du manchon 18 afin d'améliorer l'étanchéité du dispositif de raccordement pendant le laps de temps qui sépare le passage de la position ouverte à la position fermée de l'obturateur, et inversement. Afin de limiter les fuites pendant cette transition entre ouverture et fermeture, il est préférable que la course de l'obturateur soit obtenue sur un faible nombre de tours du coulisseau et de conférer par conséquent un pas important au filetage de l'obturateur 7.

Le dispositif de l'invention est avantageusement utilisé avec une enceinte ou housse souple ayant d'excellentes propriétés de barrière vis-à-vis de l'humidité et du gaz inerte éventuellement utilisé pour remplir l'enceinte, ainsi qu'une excellente solidité tant en matière de résistance à la déchirure que de la résistance aux chocs, afin de ne pas devoir recourir à d'autres éléments supplémentaires pour l'emballage de pièces ou de machines.

Un exemple de matériau convenant pour la réalisation d'une telle enceinte ou housse est un matériau composite comprenant :
a) au moins un stratifié constitué de plusieurs plis croisés et étirés à base de polyoléfines, chaque pli étant lui-même formé par coextrusion et soufflage de plusieurs couches pouvant avoir des compositions différentes selon les propriétés (soudabilité, adhésivité) que l'on veut leur communiquer,
b) une couche de liaison extrudée à haut pouvoir adhésif,
c) une mince feuille d'aluminium,
d) une couche de liaison extrudée à haut pouvoir adhésif, et
e) une couche de polyester métallisée, la face métallisée étant tournée vers la feuille d'aluminium.

Selon un mode de réalisation particulier préféré :
- le composant a) ci-dessus est constitué de deux stratifiés sus-définis liés entre eux par une couche de liaison extrudée, telle qu'une couche de polyéthylène basse densité ou similaire, et chaque couche de stratifié comprend 4 plis formés chacun de trois couches à base d'un mélange de polymères incompatibles par exemple d'un mélange de polyéthylène et de polypropylène ou d'un mélange de polyéthylène et d'un élastomère, la couche centrale représentant 70-80% du total des 3 couches et les couches extérieures représentant chacune 10-15% du total,
- la couche de liaison b) est une couche d'un mélange polymère d'éthylène et d'un bouche-pore permettant de lisser la surface de la feuille d'aluminium pour renforcer l'adhérence, ou bien si la surface de la feuille d'aluminium est de bonne qualité, une couche d'un copolymère de (méth)acrylate d'alkyle inférieur et d'éthylène,
- la feuille d'aluminium c) a une épaisseur de 20 µm environ,
- la couche de liaison d) est une couche d'un copolymère de (méth)acrylate d'alkyle inférieur et d'éthylène, et
- la couche e) est une feuille de poly(téréphtalate d'éthylène) aluminisée d'une épaisseur de 12 µm environ.

A titre indicatif, les différents composants peuvent présenter les poids unitaires approximatifs suivants :

| | |
|---|---|
| chaque stratifié du composant a) | 150 g/m² |
| couche de liaison intermédiaire entre les deux stratifiés | 20 g/m² |
| couche b) | 20 g/m² |
| feuille c) | 54 g/m² |
| couche d) | 20 g/m² |
| couche e) | 17 g/m² |

soit un poids total de 431 g/m² environ.

Un tel matériau composite constitue une barrière totale vis-à-vis de l'humidité et des gaz inertes, y compris l'hélium, tout en offrant une résistance remarquable aux agressions mécaniques (chocs, déchirure).

Le stratifié entrant dans la composition du composant a) est produit par coextrusion de trois couches en un tube que l'on souffle à un taux assez bas (1 : 1 à 1,5 : 1) et que l'on étire longitudinalement pour l'orienter uniaxialement. Le tube soufflé- est mis à plat, découpé en hélice et déployé pour former une feuille plane dont la direction d'orientation fait un angle avec la direction longitudinale de la feuille. Quatre feuilles sont alors combinées, avec leurs directions d'orientation croisées, en un film que l'on lamine et étire (par exemple à 2,25 : 1) bi-directionnellement à une température relativement basse. Des détails concernant ce type de stratifié et sa préparation peuvent être trouvés dans GB-A-1 526 722, GB-A-1 526 723 et GB-A-1 526 724 dont les enseignements sont incorporés ici par référence.

Il est à noter que l'ordre indiqué pour divers composants du matériau composite n'a pas un caractère limitatif et que des interversions peuvent être envisagées.

## Revendications

1. Dispositif de fermeture étanche et de raccordement d'une enceinte (3) à une canalisation extérieure (5), comprenant, d'une part, un corps de vanne (6) monté de manière étanche à travers un trou d'une paroi (2) de ladite enceinte (3) et, d'autre part, un obturateur (7) reçu dans ledit corps (6) et des moyens pour raccorder sélectivement de manière étanche ladite enceinte (3) à ladite canalisation (5) dans une position ouverte dudit obturateur (7), lesdits moyens de raccordement (4) comprenant un manchon amovible (18) adapté pour être fixé extérieurement de manière étanche audit corps (6), caractérisé par le fait que ledit corps de vanne (6) est constitué, d'une part, par une bague (8) comportant à l'une de ses extrémités une collerette annulaire (9) destinée à prendre appui contre la face intérieure de la paroi (2) à la périphérie dudit trou et, d'autre part, un écrou (10) de diamètre extérieur sensiblement égal à celui de ladite collerette (9) et vissé sur ladite bague (8), la longueur de la partie filetée de ladite bague (8) étant sensiblement supérieure aux épaisseurs cumulées de la paroi (2) et de l'écrou (10), que ledit obturateur (7) comprend une tête (12) portant une partie cylindrique (13) filetée extérieurement et reçue dans un alésage taraudé du corps de vanne (6), ladite partie cylindrique (13) présentant à partir de son extrémité opposée à ladite tête (12), un alésage axial (14) qui communique avec un orifice transversal (15) ménagé au voisinage de ladite tête (12) et relié à ladite canalisation extérieure (5), et que lesdits moyens de raccordement (4) comprennent également un organe (23, 31) d'actionnement dudit obturateur (7) monté à rotation et coulissement dans ledit manchon (18) pour déplacer ledit obturateur dans ledit manchon entre une position fermée dans laquelle la tête (12) de l'obturateur (7) est au contact de l'extrémité (12) de la bague (8) opposée à la collerette (9) et la partie cylindrique (13) enfoncée dans l'enceinte (3), et une position ouverte dans laquelle ladite enceinte (3) communique avec ladite canalisation (5) par l'intermédiaire dudit corps (6) et dudit manchon (18).

2. Dispositif selon la revendication 1, caractérisé par le fait que ladite tête (12) et ledit organe d'actionnement (23, 31) comprennent des moyens complémentaires (17, 28) d'accouplement pour l'entraînement en rotation dudit obturateur (7) par ledit organe (23, 31).

3. Dispositif selon la revendication 2, caractérisé par le fait que lesdits moyens complémentaires d'accouplement comprennent une empreinte (17) et une saillie (28) de forme et dimensions complémentaires ménagées, l'une dans ladite tête (12), l'autre à une extrémité (24) dudit organe d'entraînement (23, 31).

4. Dispositif selon la revendication 3, caractérisé par le fait que ladite saillie (28) est portée par une pièce cylindrique amovible (27) vissée dans ladite extrémité (24) dudit organe d'actionnement.

5. Dispositif selon la revendication 4, caractérisé par la fait que ledit manchon (18) présente un embout latéral (20) de raccordement à ladite canalisation (5) agencé pour être sensiblement aligné avec ledit orifice transversal (15) de ladite position ouverte dudit obturateur (7).

6. Dispositif selon la revendication 1, caractérisé par le fait que, ledit manchon (18) et ledit organe d'actionnement (23, 31) comprennent des moyens complémentaires de butée (21a, 25; 21b, 32) définissant respectivement lesdites positions fermée et ouverte dudit obturateur (7).

7. Dispositif selon la revendication 6, caractérisé par le fait que lesdits moyens complémentaires de butée comprennent une pièce annulaire fixe (22) à l'intérieur dudit manchon (18), dont les faces planes opposées (21 a, 21 b) coopèrent respectivement avec deux épaulements (25, 32) dudit organe d'actionnement.

8. Dispositif selon l'une quelconque des revendications 1 à 7, caractérisé par le fait que ledit corps (6) comprend une bague (8) filetée extérieurement et un écrou annulaire (10) adaptés pour enserrer entre eux les bords d'un trou de montage dudit corps dans ladite paroi (2).

9. Dispositif selon la revendication 8, caractérisé par le fait que ledit manchon (18) comporte une extrémité taraudée (19) adaptée pour être vissée sur ladite bague (8) pour assurer ladite fixation étanche desdits moyens de raccordement (4) sur ledit corps 56).

## Patentansprüche

1. Vorrichtung zum dichten Verschließen und Anschließen eines Mantels (3) an eine externe Rohrleitung (5), umfassend einerseits einen Schieberkörper (6), der in dichtender Weise durch eine Öffnung in einer Wand (2) des Mantels (3) angebracht ist, und andererseits eine Schließeinrichtung (7), die vom Körper (6) aufgenommen wird, sowie eine Einrichtung zum selektiven, dichtenden Anschließen des Mantels (3) an die Rohrleitung (5) bei geöffneter Stellung der Schließeinrichtung (7), wobei die Anschließeinrichtung (4) eine abnehmbare Muffe (18) umfasst, die außen in dichtender Weise am Körper (6) befestigt werden kann, dadurch gekennzeichnet, dass der Schieberkörper (6) einerseits aus einem Ring (8), der an einem seiner Enden einen zur Auflage an der Innenseite der Wand (2) am Umfang der Öffnung bestimmten ringförmigen Flansch (9) aufweist, und andererseits aus einer Mutter (10) besteht, die einen Außendurchmesser, der im wesentlichen dem Durchmesser des Flansches (9) entspricht, aufweist und auf den Ring (8) geschraubt ist, wobei die Länge des Gewindebereichs des Rings (8) deutlich die Summe der Dicken der Wand (2) und der Mutter (10) übersteigt, dass die Schließeinrichtung (7) einen Kopf (12) umfasst, der einen zylindrischen Bereich (13), der mit einem Außengewinde versehen ist und von einer im Schieber (6) angebrachten Bohrung aufgenommen wird, aufweist, wobei der zylindrische Bereich (13) an seinem dem Kopf (12) gegenüberliegenden Ende eine axiale Bohrung (14) aufweist, die mit einer Queröffnung (15), die in der Nähe des Kopfes (12) angeordnet ist und mit der externen Rohrleitung (5) verbunden ist, kommuniziert, und dass die Anschließeinrichtung (4) ferner eine Betätigungsvorrichtung (23, 31) für die Schließeinrichtung (7) aufweist, die rotierend und gleitend in der Muffe (18) angebracht ist, um die Schließeinrichtung in der Muffe zwischen einer geschlossenen Stellung, in der der Kopf (12) der Schließeinrichtung (7) sich in Kontakt mit dem Ende (12) des Rings(8) gegenüber dem Flansch (9) und mit dem zylindrischen Bereich (13) des Mantels (3) befindet, und einer geöffneten Stellung, in der der Mantel (3) mit der Rohrleitung (5) mittels des Körpers (6) und der Muffe (18) kommuniziert, zu verstellen.

2. Vorrichtung nach Anspruch 1, dadurch gekennzeichnet, dass der Kopf (12) und die Betätigungsvorrichtung (23, 31) zusätzliche Kupplungseinrichtungen (17, 28) umfasst, um die Schließeinrichtung (7) durch die Vorrichtung (23, 31) in Rotation zu versetzen.

3. Vorrichtung nach Anspruch 2, dadurch gekennzeichnet, dass die zusätzlichen Kupplungseinrichtungen eine Vertiefung (17) und einen Vorsprung (28) mit komplementären Formen und Abmessungen umfassen, wovon die eine im Kopf (12) und die andere an einem Ende (24) der Antriebsvorrichtung (23, 31) angebracht ist.

4. Vorrichtung nach Anspruch 3, dadurch gekennzeichnet, dass der Vorsprung (28) von einem abnehmbaren zylindrischen Teil (27), das in das Ende (24) der Betätigungsvorrichtung eingeschraubt ist, getragen wird.

5. Vorrichtung nach Anspruch 4, dadurch gekennzeichnet, dass die Muffe (18) ein seitliches Ansatzstück (20) zum Anschließen der Rohrleitung (5) aufweist, das so ausgestaltet ist, dass es im wesentlichen mit der Queröffnung (15) in der geöffneten Stellung der Verschließeinrichtung (7) ausgerichtet ist.

6. Vorrichtung nach Anspruch 1, dadurch gekennzeichnet, dass die Muffe (18) und die Betätigungsvorrichtung (23, 31) zusätzliche Anschlageinrichtungen (21a, 26; 21b, 32) aufweisen, die die geschlossene bzw. die geöffnete Stellung der Schließeinrichtung (7) definieren.

7. Vorrichtung nach Anspruch 6, dadurch gekennzeichnet, dass die zusätzlichen Anschlageinrichtungen ein im Inneren der Muffe (18) befestigtes ringförmiges Teil (22) umfassen, dessen gegenüberliegende Ebenen (21a, 21b) mit zwei Schultern (25, 32) der Betätigungsvorrichtung zusammenwirken.

8. Vorrichtung nach einem der Ansprüche 1 bis 7, dadurch gekennzeichnet, dass der Körper (6) einen mit einem Außengewinde versehenen Ring (8) und eine ringförmige Mutter (10) umfasst, die dazu geeignet sind, dazwischen die Ränder einer Montageöffnung des Körpers in der Wand (2) einzuschließen.

9. Vorrichtung nach Anspruch (8), dadurch gekennzeichnet, dass die Muffe (18) ein mit einem Gewinde versehenes Ende (19) aufweist, das auf den Ring (8) aufgeschraubt werden kann, um die dichtende Befestigung der Anschließeinrichtung (4) am Körper (6) zu gewährleisten.

## Claims

1. A device for seal-tight closure and connection of a chamber (3) to an external pipe system (5) comprising a valve body (6) mounted in seal-tight manner through a hole in a wall (2) of the chamber (3) and also comprising a shutter (7) received in the body (6) and means for selectively and sealingly connecting the chamber (3) to the pipe system (5) with the shutter (7) in an open position, the connecting means (4) comprising a movable sleeve (18) adapted to be externally and sealingly secured to the body (6), characterised in that the valve body (6) comprises a ring (8) having an annular collar (9) at one end for bearing against the inner surface of the wall (2) at the periphery of the hole and also comprises a nut (10) having an external diameter substantially equal to that of the collar (9) and screwed to the ring (8), the length of the threaded part of the ring (8) being substantially greater than the combined thickness of the wall (2) and the nut (10), the shutter (7) has a head (12) bearing an externally threaded cylindrical part (13) and received in a threaded bore in the valve body (6), the cylindrical part (13), starting from its end remote from the head (12), has an axial bore (14) communicating with a transverse orifice (15) formed near the head (12) and connected to the outer pipe system (5), and the connecting means also comprise a means (23, 31) for actuating the shutter (7) and mounted for rotating and sliding in the sleeve (18) in order to move the shutter in the sleeve between a closed position in which the head (12) of the shutter (7) is in contact with the end (12) of the ring (8) remote from the collar (9) and the cylindrical part (13) is inserted into the chamber (3), and an open position in which the chamber (3) communicates with the pipe system (5) via the body (6) and the sleeve (18).

2. A device according to claim 1, characterised in that the head (12) and the actuating means (23, 31) comprise complementary coupling means (17, 28) for rotating the shutter (7) via the means (23, 31).

3. A device according to calim 2, characterised in that the complementary coupling means comprise an indentation (17) and a projection (28) of complementary shape and size, one being formed in the head (12) and the other at an end (24) of the drive means (23,31).

4. A device according to claim 3, characterised in that the projection (28) is borne by a movable cylindrical component (27) screwed into the end (24) of the actuating means.

5. A device according to claim 4, characterised in that the sleeve (18) has a lateral socket (20) for connecting to the pipe system (5) and adapted to be substantially aligned with the transverse orifice (15) in the open position of the shutter (7).

6. A device according to claim 1, characterised in that the sleeve (18) and the actuating means (23,31) comprise complementary abutment means (21a, 25; 21b, 32) which define the closed and open position respectively of the shutter (7).

7. A device according to claim 6, characterised in that the complementary abutment means comprise a fixed annular component (22) inside the sleeve (18) and having opposite flat surfaces (21a, 21b) co-operating with two respective shoulders (25,32) of the actuating means.

8. A device according to any of claims 1 to 7, characterised in that the body (6) comprises an externally threaded ring (8) and an annular nut (10) adapted between them to clamp the edges of hole for fitting the body in the wall (2).

9. A device according to claim 8, characterised in that the sleeve (18) has a threaded end (19) for screwing on to the ring (8) for sealingly securing the connecting means (4) to the body (56).
